# EUROPEAN PATENT APPLICATION

(11) **EP 4 670 952 A1**
(43) Date of publication of application: **31.12.2025**
(21) Application number: 24183914.1
(22) Date of filing: 24.06.2024
(51) Int. Cl.: B29C 65/44, B29C 65/46, B64C 1/14, B64C 27/14, B29L 31/30, B29L 31/00

(54) **A METHOD OF MANUFACTURING A HYBRID METAL-COMPOSITE COMPONENT UNIT SUITABLE FOR AN AERONAUTICAL APPLICATION**

(71) Applicant: AIRBUS HELICOPTERS DEUTSCHLAND GmbH, 86609 Donauwörth (DE)
(72) Inventor: WOLF, Christian, 86609 DONAUWÖRTH (DE); REINSPACH, Sebastian, 86153 AUGSBURG (DE); PASCOE, Xaver, 86159 AUGSBURG (DE)
(74) Representative: GPI Brevets

(57) **Abstract**

A method of manufacturing a metal-composite component (300) comprises providing a thermoplastic composite component (340), providing a metallic connecting component (310, 350) having at least one vent hole, forming a form-fit connection such that the metallic connecting component (310, 350) encompasses the thermoplastic composite component (340) in an overlap area (315, 355) having the at least one vent hole, and heating the metallic connecting component (310, 350) and the thermoplastic composite component (340) in the overlap area (315, 355) so that part of the thermoplastic material of the thermoplastic composite component (340) melts and passes through the at least one vent hole. The hole serves as a visual indication of correct connection.

Preferably, heating is provided by induction or alternatively by an oven. The metal-composite component (300) may be a shaft for an aircraft door, or a control stick in a helicopter, or a power transmission shaft.

## Description

The invention is related to a method of manufacturing a hybrid metal-composite component unit, in particular for use in aeronautical applications. The invention is further related to an aircraft passenger door for an aircraft, which comprises a hybrid metal-composite component unit that is manufactured according to such a method, and to a control shaft unit for a rotorcraft that is manufactured according to such a method.

In general, lever-shaft connections as well as shaft-to-shaft connections are used in different variants for technical systems. Depending on the manufacturing method of the shaft, the maximum extension or the overall length of the shaft is limited. For instance, deep-drilled shafts as well as additively manufactured shafts are limited to an extension of approximately 1000 mm. In order to achieve a respectively required length of a given final shaft assembly, a shaft-to-shaft connection may, therefore, be necessary.

A typical shaft-to-shaft connection in such a shaft assembly transfers multiple loads (e. g. torque, lateral forces, normal forces), and, thus, such a shaft-to-shaft connection requires a maximum precision (i. e., very low tolerances) and a clearance-free and play-free configuration. Bolted connections are typical solutions for such shaft-to-shaft connections as bolted connections can be enhanced to fulfil associated precision requirements. However, the manufacturing method is characterized by a high manufacturing effort and high cost.

For instance, a full metallic solution may be used to form a three-part shaft assembly. Such a metallic solution is characterized by a precision fit (e. g. H8/g6) and a screw connection. The screw connection uses a tapered drilling and a screw with a tapered shape to achieve a clearance-free and play-free situation. However, disadvantages of the screw connection include: the individual parts, before the joint, require (precise) machining, i. e. manufacturing of the precision fit, the creation of the screw connection requires an additional drilling operation, the creation of the tapered drilling holes require to control all three axial dimensions (x, y, z-axis) of the drilling tool for drilling and reaming, and the machining of the joining interface and the screw connection create a significant manufacturing effort.

Furthermore, a full-metallic (steel), welded lever-shaft assembly is also well-known in the prior art. A weldable carbon steel is used to create the necessary shaft and to connect the levers with the shaft body for such an assembly. If necessary, welding is also applied to manufacture a shaft-to-shaft connection so that the assembly (the integration) comes into existence by the application of metallic welding as joining method. However, the manufacturing of shaft-to-shaft connections and lever-shaft assemblies by the application of welding suffers from the high density of steel (which results in high weight), from corrosion protection needs and from very high efforts regarding the means of process security (true for manual welding). Moreover, the weldable steel does not provide corrosion resistance capabilities and would require a special surface treatment to be performed to make the mechanism element compliant with the requirements.

Alternative to the use of metallic shafts, shafts made from carbon fiber reinforced polymer (CFRP) are also well-known. For instance, an ultrasonic device to characterize the flow of resin entering and exiting an injection mold during a phase of impregnation, by the resin, of a preform contained in the injection mold. is described in document US 2017/0348924 A1, wherein in addition a method for implementing the device to determine the integrity of the operation of impregnating the preform with resin, the preform being located in an injection mould into which the resin flows, is also described. Document DE 10 2014 004 158 A1 describes a method for producing structural elements of load introduction elements and fiber-plastic composite hollow profiles with thermoplastic matrix material and structural elements, whereas document US 10 527 086 B2 describes a method of mounting a mid-strut fitting onto a composite cylinder to form a strut.

CFRP shafts, in turn, are typically made by application of a (filament) winding process. Winding on a rotating mandrel produces shafts between four meters and six meters length. The shafts made from CFRP may face underlying load introduction issues. More specially, for higher loaded shafts (e. g. axial load, bending load, torsion load), sophisticated solutions (fittings) are used to take over concentrated loads and to distribute the loads into the shafts. For instance, document DE 10 2007 051 517 B4 describes a torsionally resistant hollow shaft made of fiber composite material for positive connection with load introduction elements on the outside of the hollow shaft. Furthermore, comparable to the afore-mentioned solution, the connection between the fitting and the shaft may also be based on bolted connections which require a high manufacturing precision and create high cost.

Alternative to the use of bolted connections, adhesive bonding can be applied to create a shaft-to-shaft connection or to connect a fitting to a shaft. For instance, documents US 6 860 013 B1 and EP 2 823 191 B1 each describe a method of joining a first metallic suspension component made of a metallic material and a second suspension component made from the same or a dissimilar material, wherein a portion of one suspension component is positioned within a portion of the other suspension component in an overlapping manner, thereby forming an overlapping portion. A metallic band may be disposed around the overlapping portion and an inductor is positioned around the overlapping portion. The inductor is energized to generate a magnetic field for collapsing at the overlapping portion and the metallic band at a velocity sufficient to magnetic pulse weld the components to each other, thereby securing the first and second suspension components together. However, the technical problem with bonded connections is the means of process security. The verification of the adhesive bonding is technically difficult and economically expensive.

It is, therefore, an object of the present invention to provide a new method of manufacturing a hybrid metal-composite component unit and, in particular, a hybrid metal-composite component unit that is suitable for use in aeronautical applications such as an aircraft passenger door of an aircraft or a control shaft unit of a rotorcraft.

The above-described object is solved by a method of manufacturing a hybrid metal-composite component unit that is suitable for use in aeronautical applications, comprises the features of claim 1. More specifically, the method comprises at least the steps of: providing a thermoplastic composite component comprising non-consolidated material and/or consolidated material; providing at least one metallic connecting component comprising at least one vent hole; forming a form-fit connection between the at least one metallic connecting component and the thermoplastic composite component, wherein the at least one metallic connecting component encompasses the thermoplastic composite component in an overlap area, and wherein the at least one vent hole is arranged in the overlap area; and heating the at least one metallic connecting component and the thermoplastic composite component in the overlap area for melting the thermoplastic composite component in the overlap area at least partly such that thermoplastic material of the thermoplastic composite component passes through the at least one vent hole.

Advantageously, the inventive method of manufacturing a hybrid metal-composite component unit allows to connect a predetermined number of shafts, e. g. lever-shaft integrated parts, or levers into connected shafts with increased process security. Illustratively, the method uses a thermoplastic CFRP tube to connect two (metallic) lever-shaft integrated parts or two metallic fittings to each other. The thermoplastic CFRP tube may be manufactured by the application of a suitable braiding process or it may alternatively be manufactured by a suitable winding process. The metallic fittings or shafts, which may be metallic end pieces or metallic levers, may be made from additive manufacturing, using titanium alloys, e. g. Ti6Al4V, corrosion-resistant steel (CRES) alloys, or enhanced aluminum alloys, e. g. Scalmalloy^{®} alloy or ScanCromAI^{®} alloy, wherein powder bed fusion may be used for the additive manufacturing. Furthermore, the metallic end pieces or metallic levers are preferably characterized by a form fit element which has e. g. a polygonal shape. By way of example, a lateral-force-free shaft-to-shaft connection, typically a polygonal shape, is used, e. g. a six-sided polygonal shape.

Advantageously, the density of thermoplastic CFRP tubes is less compared to titanium tubes used in conventional applications so that a weight reduction may be achieved. Furthermore, the thermoplastic CFRP tubes adapt easily to the geometry of the metallic fittings or shafts so that the natural quality of all parts (e. g. a respective surface quality after an associated print process) is sufficient to achieve a high strength joint and, thus, a particular manufacturing quality as well as a particular high precision machining are not required. In addition, titanium, thermoplastic CFRP, and connections therebetween also do not require a corrosion protection scheme, thus, becoming more robust and cost-effective.

In an illustrative realization, an already consolidated thermoplastic CFRP tube and at least one metallic lever-shaft integrated part are joined to each other. A fixation tool is used to secure a required correct positioning of the individual components. The arrangement is such that the metallic lever-shaft integrated part overlaps with the thermoplastic CFRP tube in an associated overlap area. Electrical inductors (e. g. inductive loops) are used in order to generate heat locally in the associated overlap area. The frequency of the electrical inductors is customized for thermoplastic CFRP material. A pressurized hose is positioned in the inside of the thermoplastic CFRP tube and applies a predetermined consolidation pressure. An increased temperature obtained by means of the electrical inductors melts the matrix of the thermoplastic CFRP material locally in the overlap area. The applied heat and pressure re-consolidate the thermoplastic CFRP tube in the overlap area. The thermoplastic CFRP material in the overlap area adapts to the shape of the metallic lever-shaft integrated part. A subsequent reduction of the temperature, i. e. a subsequent cooling down, freezes the thermoplastic CFRP material of the thermoplastic CFRP tube and a joint between the individual components, i. e. between the thermoplastic CFRP tube and the metallic lever-shaft integrated part, is obtained.

In another illustrative realization, a non-consolidated thermoplastic CFRP tube and the at least one metallic lever-shaft integrated part are arranged in the fixation tool. A respectively obtained overall assembly is such that the metallic lever-shaft integrated part creates an overlap with the thermoplastic CFRP tube. The overall assembly and the fixation tool are positioned in an oven and will be heated to the melting temperature of the thermoplastic CFRP material of the non-consolidated thermoplastic CFRP tube, which is approximately 300°C to 350°C, and cooled down in a controlled process. A pressurized hose in the inside of the thermoplastic CFRP tube applies a respectively required consolidation pressure. The pressure and the increased temperature melt the matrix of the thermoplastic CFRP material and consolidate the material. More particularly, pressure and heat are applied to the thermoplastic CFRP material in an associated overlap area between the non-consolidated thermoplastic CFRP tube and the metallic lever-shaft integrated part. The thermoplastic CFRP material of the non-consolidated thermoplastic CFRP tube adapts in the overlap area to the shape of the metallic lever-shaft integrated part. A subsequent reduction of the temperature, i. e. a subsequent cooling down, freezes the thermoplastic CFRP material of the non-consolidated thermoplastic CFRP tube and a joint between the individual components, i. e. between the thermoplastic CFRP tube and the metallic lever-shaft integrated part, is obtained. The connection between the metallic lever-shaft integrated part and the thermoplastic CFRP tube occurs in-situ. This means that the consolidation of the non-consolidated thermoplastic CFRP tube into a solid tube will be performed synergistically, i. e. time-parallel in the same process, regarding the creation of the joint between the individual components.

As described above the in-situ created connection between the thermoplastic CFRP tube and the at least one metallic lever-shaft integrated part results in a geometrical adaptation of the thermoplastic CFRP tube having a smaller diameter and being positioned inside of the metallic lever-shaft integrated part under the application of heat, preferably 300 °C to 350 °C, and pressure to the at least one metallic lever-shaft integrated part having a bigger diameter and being positioned outside of the thermoplastic CFRP tube.

A respective force transmission in the finally consolidated joint may exploit the following three modes of action:

In a first illustrative mode of action, the metallic lever-shaft integrated part preferably uses a kind of form fit, e. g. a six-sided polygonal shape. The thermoplastic CFRP tube adapts to this shape under elimination of any tolerances. A clearance-free and play-free joint on the macro level is obtained.

A second illustrative mode of action may be used by form fit elements, such as micro-pins or sheds, at meso scale. Form fit elements at meso scale may easily be manufactured via additive manufacturing of metals. Alternative to pins or sheds micro pyramids or embossed diamonds or equivalent form fitting elements may be applied.

The micro level offers a third illustrative mode of action, in this case, a rough surface is seen as advantageous for a respectively obtained kind of joint. Comparable to the manufacturing method for the second illustrative mode of action a rough surface also offers undercuts or form fit elements on a microscopic level. The thermoplastic CFRP material of the thermoplastic CFRP tube transfers its characteristics at temperatures between 300 °C and 350 °C into a melt and perfectly creates the counter shape of respectively given (outer) geometries on meso and micro level, thus, resulting in creation of a form fit.

In total, a multi-level joint may be obtained (macro level, meso level, micro level). The advantage of this are a high load transmission capability, increased safety margins and a robust sizing of respectively obtained assemblies.

Furthermore, as described above, the respectively obtained joint is preferably obtained by the consolidation, i. e. melting, pressure application, and freezing, of a thermoplastic CFRP tube to an additively manufactured element, i. e. a metallic lever-shaft integrated part. Preferably, a pattern of vent holes is used to evaluate the quality of the respectively obtained joint. More specifically, in order to achieve a suitable joint between a given thermoplastic CFRP tube and a metallic lever-shaft integrated part, occurrence of air entrapments must be avoided. Therefore, the metallic lever-shaft integrated parts are equipped with vent holes having e. g. diameters in a range of approximately 0.5 mm to approximately 1.5 mm. These vent holes are preferably designed such that an underlying structural integrity is not affected and a respective manufacturing method may easily handle it.

During manufacturing, the thermoplastic matrix resin of the thermoplastic CFRP material of the thermoplastic CFRP tube melts. In an illustrative realization, under a respectively applied pressure and after the exit of the air, the melted thermoplastic CFRP material fills the vent holes and is visible at the outside of the metallic lever-shaft integrated part after the manufacturing. The presence of resin accumulation in the vent holes indicates that the thermoplastic CFRP material received a required process temperature and a required pressure such that a joint has been created as intended. The leave of the temporarily melted thermoplastic CFRP material through the vent holes directly indicates that the process temperature of the thermoplastic CFRP material has been achieved and that the pressure has joined the thermoplastic CFRP tube with the metallic lever-shaft integrated part(s). A suitable vent hole pattern shows that the advantageous process conditions have been reached all over the surface of the joint.

Advantageously, verification of a given manufacturing result is enabled and, thus, a suitable inspection capability is provided. The provision of the vent hole pattern and leave of the thermoplastic CFRP material through the vent holes create a direct means of inspection and, thus, means of process security. As soon as all vent holes are filled with the thermoplastic CFRP material, a respectively obtained mechanical connection has developed its required strength. This interaction between the thermoplastic CFRP material leave via the vent holes and the strength of the obtained joint may easily be proven by strength tests, such as torsion tests, tension/compression tests, and/or bending tests. For commercial applications strength tests are recommended, preferably during qualification only, to verify the relation between the thermoplastic CFRP material leave via the vent holes and the strength of the obtained joint. In a serial production a simple visual inspection will be applied to ensure the quality of the obtained joint. The thermoplastic CFRP material is recognizable already by visual inspection. A clear "pass" criterion, e. g. the thermoplastic CFRP material is visible at all vent holes, and a clear "fail" criteria, e. g. 50 percent of the vent holes are not filled, may be established. Sophisticated multi-physical, indirect inspection methods such as ultrasonic inspection or X-ray or computer tomography for checking the quality of the obtained joint, thus, become obsolete. A test campaign, e. g. in the framework of application validation, may be performed to determine the "fail" criteria.

According to some aspects, heating the at least one metallic connecting component and the thermoplastic composite component in the overlap area comprises: applying pressure to the thermoplastic composite component in the overlap area such that the thermoplastic material is pressed through the at least one vent hole and passes through the at least one vent hole.

According to some aspects, the at least one metallic connecting component and the thermoplastic composite component are hollow.

Preferably, the method further comprises: prior to heating the at least one metallic connecting component and the thermoplastic composite component in the overlap area, positioning a high-pressure hose in the overlap area in the thermoplastic composite component inside of the at least one metallic connecting component.

According to some aspects, applying pressure to the thermoplastic composite component in the overlap area such that the thermoplastic material is pressed through the at least one vent hole comprises: using the high-pressure hose to press the thermoplastic composite component in the overlap area against the at least one metallic connecting component.

According to some aspects, the at least one metallic connecting component and the thermoplastic composite component comprise matching polygonal cross sections.

Preferably, forming the form-fit connection between the at least one metallic connecting component and the thermoplastic composite component comprises: arranging the matching polygonal cross sections congruently in the overlap area.

According to some aspects, the at least one metallic connecting component comprises at least one of titanium, a titanium alloy, corrosion-resistant steel, a corrosion-resistant steel alloy, or an aluminum alloy.

According to some aspects, providing the at least one metallic connecting component comprising the at least one vent hole comprises: performing additive manufacturing for creating the at least one metallic connecting component, in particular using a powder bed fusion process.

According to some aspects, performing additive manufacturing for creating the at least one metallic connecting component comprises: creating the at least one vent hole with a diameter of at most 3 mm, preferably in a range from 0.5 mm to 1.5 mm.

According to some aspects, the thermoplastic composite component comprises a thermoplastic fiber reinforced polymer, in particular a thermoplastic carbon fiber reinforced polymer.

According to some aspects, providing the thermoplastic composite component comprises: performing one of a winding process or a braiding process for creating the thermoplastic composite component.

According to some aspects, the thermoplastic composite component is a consolidated thermoplastic composite component.

Preferably, heating the at least one metallic connecting component and the thermoplastic composite component in the overlap area comprises: using at least one inductive heating element for generating heat locally in the overlap area.

According to some aspects, the thermoplastic composite component is a non-consolidated thermoplastic composite component.

Preferably, heating the at least one metallic connecting component and the thermoplastic composite component in the overlap area comprises: positioning the at least one metallic connecting component and the thermoplastic composite component in an oven; and heating the oven up to melting temperature of the thermoplastic fiber reinforced polymer.

According to some aspects, the at least one metallic connecting component comprises at least one of a tube-shaped shaft, lever, or stick, or a sleeve-shaped fitting, or connector.

Preferably, the thermoplastic composite component comprises at least one of a tube-shaped shaft, or a torsion spring.

The present invention further provides an aircraft passenger door for an aircraft, the aircraft passenger door comprising the features of claim 14. More specifically, according to the present invention an aircraft passenger door for an aircraft comprises a thermoplastic composite component and at least one metallic connecting component forming together a hybrid metal-composite component unit that is manufactured using the method as described above.

The present invention further provides a control shaft unit for a rotorcraft, the control shaft unit comprising the features of claim 15. More specifically, according to the present invention a control shaft unit for a rotorcraft comprises a thermoplastic composite component and at least one metallic connecting component forming together a hybrid metal-composite component unit that is manufactured using the method as described above.

Preferred embodiments of the invention are outlined by way of example in the following description with reference to the attached drawings. In these attached drawings, identical or identically functioning components and elements are labelled with identical reference numbers and characters and are, consequently, only described once in the following description.
- Figure 1 is a perspective view of an illustrative aircraft having an aircraft passenger door with a hybrid metal-composite component unit manufactured using a method according to the present invention, wherein the hybrid metal-composite component unit is formed using a thermoplastic composite component and at least one metallic connecting component,
- Figure 2 is a perspective view of the aircraft passenger door of Figure 1 with the hybrid metal-composite component unit,
- Figure 3 is a perspective view of the hybrid metal-composite component unit of Figure 2,
- Figure 4 is a cross-sectional view of the hybrid metal-composite component unit of Figure 3,
- Figure 5 is a cross-sectional view of the hybrid metal-composite component unit of Figure 3 and Figure 4, wherein a high-pressure hose is positioned in an overlap area in the thermoplastic composite component inside of the at least one metallic connecting component according to a method of the present invention,
- Figure 6 is an enlarged view of a section of the hybrid metal-composite component unit of Figure 3 to Figure 5, wherein at least one vent hole is arranged in the overlap area,
- Figure 7 is a perspective view of the hybrid metal-composite component unit of Figure 3 to Figure 6, wherein at least one inductive heating element is provided for generating heat locally in the overlap area according to a method of the present invention,
- Figure 8 is a perspective view of an illustrative rotary-wing aircraft with a control shaft unit comprising a thermoplastic composite component and at least one metallic connecting component forming together a hybrid metal-composite component unit that is manufactured using a method according to the present invention,
- Figure 9 is a perspective view of an illustrative control stick for an aircraft comprising a thermoplastic composite component and at least one metallic connecting component forming together a hybrid metal-composite component unit that is manufactured using a method according to the present invention,
- Figure 10 is an enlarged view of a section of the control stick of Figure 9,
- Figure 11 is a flowchart of a manufacturing method according to the present invention,
- Figure 12 is a flowchart of an illustrative embodiment of the manufacturing method of Figure 11, and
- Figure 13 is a flowchart of a heat generating process of another illustrative embodiment of the manufacturing method of Figure 11.

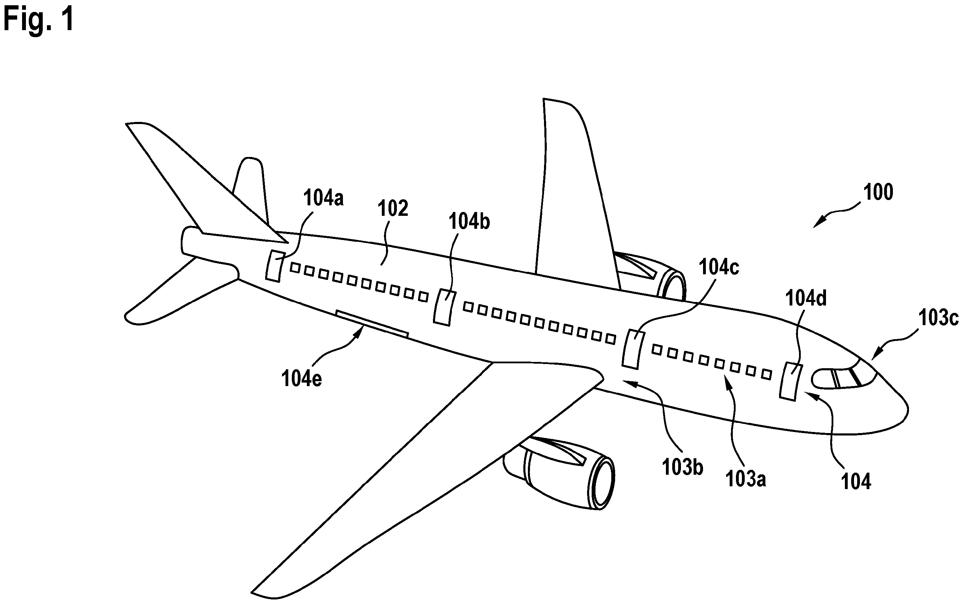

Figure 1 shows an aircraft 100 with an aircraft airframe 102, which is sometimes also referred to as fuselage 102. The aircraft 100 illustratively comprises a passenger cabin 103a, a cargo deck 103b, and a flight deck or cockpit 103c. If desired, the aircraft 100 is accessible via a plurality of aircraft doors 104, which exemplarily comprises several cabin access doors 104a, 104b, 104c and 104d, as well as one or more cargo deck access doors 104e. By way of example, the passenger cabin 103a and the flight deck 103c are accessible via the cabin access doors 104a, 104b, 104c and 104d, and the cargo deck 103b is accessible via the one or more cargo deck access doors 104e.

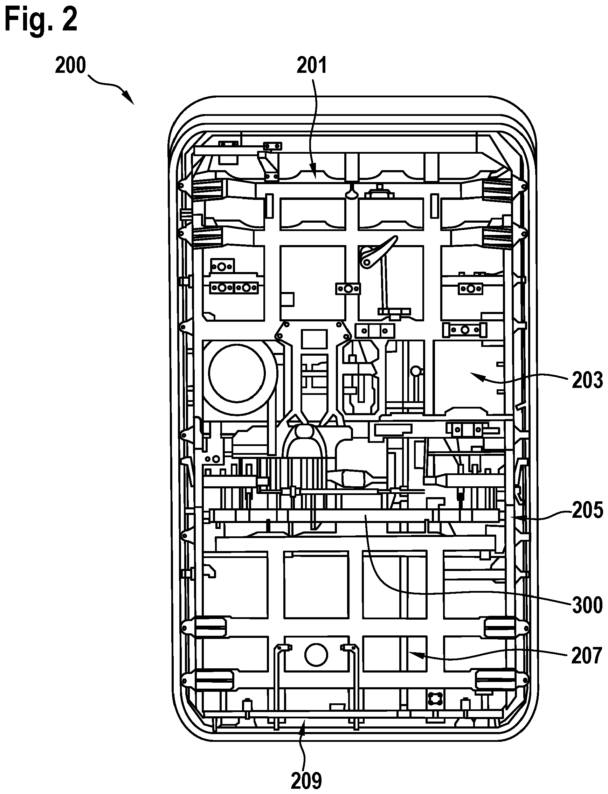

The plurality of aircraft doors 104 are illustratively adapted to close the aircraft airframe 102 (i. e., fuselage 102) of the aircraft 100 in a fluid-tight manner. One or more of the plurality of aircraft doors 104 is associated with mechanical components such as drive or control shafts, rods, bars, etc. to transfer loads to perform an aircraft door opening or closing operation. According to one aspect, at least one, and preferably each one, of the plurality of aircraft doors 104 is equipped with at least one hybrid metal-composite component unit (e. g. hybrid metal-composite component unit 300 of Figure 2), which may be used as a sequencer shaft.

Illustratively, aircraft 100 is an airplane. However, the present embodiments are not limited to airplanes. Instead, any vehicle with vehicle doors that may be equipped with a hybrid metal-composite component unit according to the present invention is likewise contemplated. By way of example, the hybrid metal-composite component unit according to the present invention may alternatively be applied to vessels, such as ships and so on.

In other words, the hybrid metal-composite component unit according to the present invention is not limited to aircraft doors, but can likewise be applied to any arbitrary vehicle door. However, for purposes of illustration, the hybrid metal-composite component unit according to the present invention is hereinafter described with respect to aircraft doors and, only exemplarily, with respect to aircraft cabin access doors.

Figure 2 shows a perspective view of an illustrative aircraft door, e. g. one of the plurality of aircraft doors 104 of Figure 1, which is illustratively embodied as an aircraft passenger door 200. However, it should be noted that the aircraft passenger door 200 is merely described representatively for all cabin access doors 104a, 104b, 104c, 104d of the aircraft 100 of Figure 1.

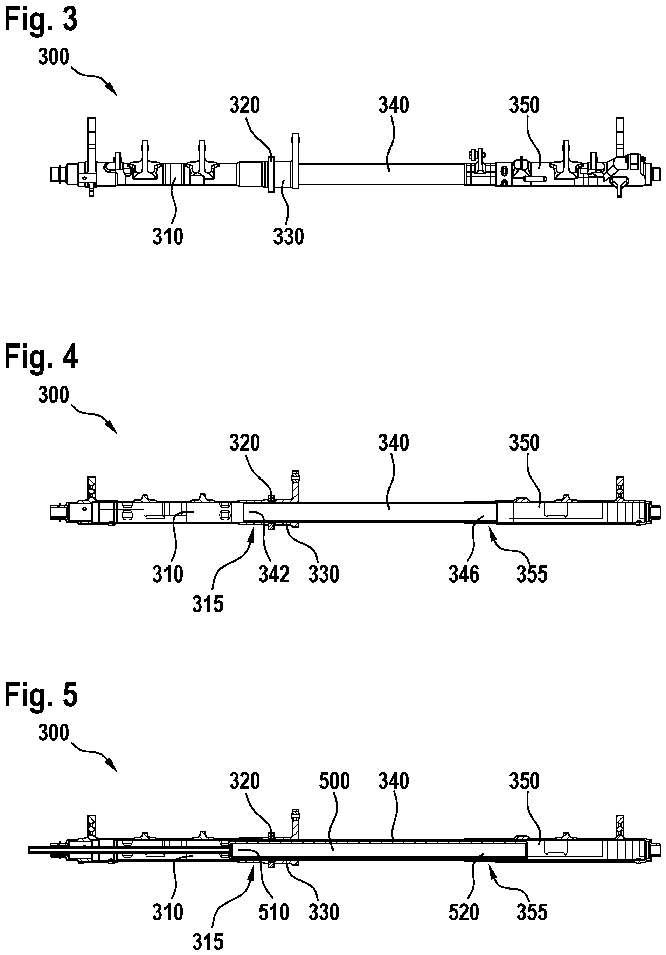

Preferably, the aircraft passenger door 200 closes an opening in an aircraft airframe (e. g., aircraft airframe 102 of Figure 1) of an aircraft (e. g., aircraft 100 of Figure 1), wherein the aircraft airframe is adapted for accommodating the aircraft passenger door 200 in a closed state, and wherein an mechanical or electromechanical door activation system 205 with a sequencer shaft 300 is adapted for operating in a normal opening mode, an emergency opening mode, and a closing mode. Preferably, the sequencer shaft 300 is embodied as a hybrid metal-composite component unit, as described in more detail below at Figure 3.

By way of example, the mechanical or electromechanical door activation system 205 performs an aircraft door opening operation that transitions the aircraft passenger door 200 from the closed state to an opened state in the normal opening mode and the emergency opening mode and an aircraft door closing operation that transitions the aircraft passenger door 200 from the opened state to the closed state in the closing mode.

Illustratively, the aircraft passenger door 200 includes an associated door structure 201 and an outer skin 203. The aircraft passenger door 200 may be equipped with rods 207 and control shafts 209. By way of example, rods 207 and control shafts 209 may include latching and locking lever, lifting and lowering lever, arming fork, etc., for transmission mechanisms to perform actions of the aircraft passenger door 200. However, such transmission mechanisms are generally well-known in the art and, as such, not part of the present invention. Accordingly, arrangements of the door structure 201 and operations of the mechanical or electromechanical door activation system 205 of the aircraft passenger door 200 are not described in detail, for simplicity and brevity.

However, it should be noted that the aircraft passenger door 200 is only described representatively and by way of example for any arbitrary vehicle door, which may use a hybrid metal-composite component unit according to the present invention, such as the sequencer shaft 300.

Figure 3 shows the sequencer shaft 300 of the mechanical or electromechanical door activation system 205 of Figure 2. Preferably, the sequencer shaft 300 is embodied as a hybrid metal-composite component unit according to the present invention and, therefore, also referred to hereinafter as "the hybrid metal-composite component unit 300".

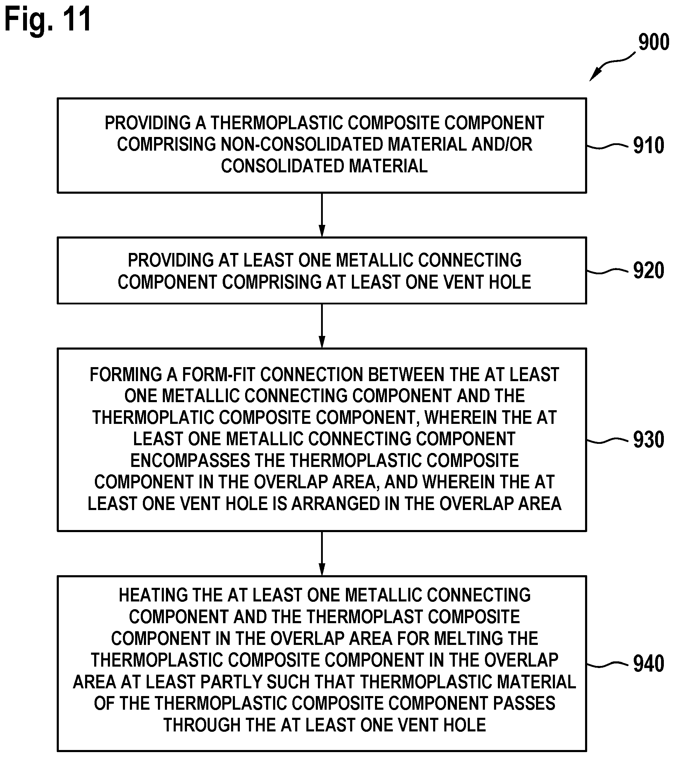

Preferably, the hybrid metal-composite component unit 300 is formed by a thermoplastic composite component and at least one metallic connecting component using a method (e. g. method 900 in Figure 11) of manufacturing a hybrid metal-composite component unit that is suitable for use in aeronautical applications. However, the hybrid metal-composite component unit 300 is not limited to sequencer shafts. Instead, any in situ-manufactured shaft-to-shaft connection that may be formed similar to the hybrid metal-composite component unit 300 by a thermoplastic composite component and at least one metallic connecting component is likewise contemplated. Consequently, the present manufacturing method is not limited to manufacturing sequencer shafts but may alternatively be applied to shafts and sticks for an aircraft, a lever-shaft arrangement for a gear system, a torsion spring, and so on.

As shown in Figure 3, the hybrid metal-composite component unit 300 illustratively comprises a sequencer shaft aft part 310, a sequencer shaft middle part 340, and a sequencer shaft forward part 350. If desired, the hybrid metal-composite component unit 300 may further include a bearing component 320 and a lever component 330. Illustratively, the sequencer shaft aft part 310 is a metallic connecting component. By way of example, the sequencer shaft aft part 310 is made from titanium powder bed fusion. If desired, the sequencer shaft forward part 350 may also be a metallic connecting component that is made from titanium powder bed fusion. The sequencer shaft middle part 340 is a thermoplastic composite component, which is illustratively made from thermoplastic CFRP. The sequencer shaft middle part 340 may be created by a braiding or winding process.

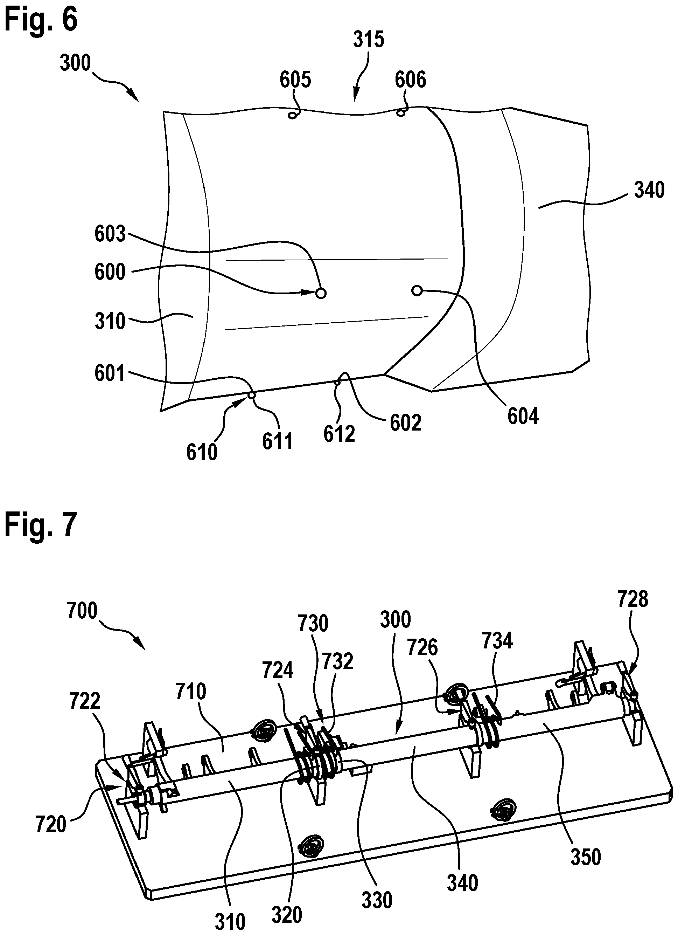

According to some aspects, the sequencer shaft middle part 340 comprises non-consolidated material and/or consolidated material. Furthermore, sequencer shaft aft part 310 and/or sequencer shaft forward part 350 comprises at least one vent hole (e. g., vent holes 601, 602, 603, 604, 605, 606 of Figure 6).

By way of example, the sequencer shaft middle part 340 is already consolidated prior to form the hybrid metal-composite component unit 300. Preferably, a form-fit connection is formed between the sequencer shaft middle part 340 and at least one of the sequencer shaft aft part 310 and the sequencer shaft forward part 350.

Illustratively, one form-fit connection is formed between the sequencer shaft aft part 310 and the sequencer shaft middle part 340. If desired, another form-fit connection is formed between the sequencer shaft forward part 350 and the sequencer shaft middle part 340. By way of example, the sequencer shaft aft part 310 and/or the sequencer shaft forward part 350 encompasses the sequencer shaft middle part 340 in an overlap area (e. g., overlap areas 315 and 355 of Figure 4) and the at least one vent hole is arranged in the overlap area. If desired, the sequencer shaft aft part 310 and/or the sequencer shaft forward part 350 may use a six-sided polygon as flange geometry in the overlap area for the form-fit connection.

Figure 4 shows the hybrid metal-composite component unit 300 of Figure 3 with the sequencer shaft aft part 310, the sequencer shaft middle part 340, and the sequencer shaft forward part 350. More specifically, the hybrid metal-composite component unit 300 is shown in cross-sectional view cut along a longitudinal axis of the hybrid metal-composite component unit 300. Accordingly, an aft part overlap area 315 between the sequencer shaft aft part 310 and the sequencer shaft middle part 340, and a forward part overlap area 355 between the sequencer shaft forward part 350 and the sequencer shaft middle part 340 are illustrated in detail.

By way of example, the sequencer shaft aft part 310 and the sequencer shaft middle part 340 both comprise aft matching polygonal cross sections 342 for forming a form-fit connection in the aft part overlap area 315. Similarly, the sequencer shaft forward part 350 and the sequencer shaft middle part 340 both comprise forward matching polygonal cross sections 346 for forming a form-fit connection in the forward part overlap area 355.

Illustratively, the aft matching polygonal cross sections 342 of the sequencer shaft aft and middle parts 310, 340 are congruently arranged in the aft part overlap area 315, whereas the forward matching polygonal cross sections 346 of the sequencer shaft middle and forward parts 340, 350 are congruently arranged in the forward part overlap area 355. As such, the sequencer shaft aft, middle, and forward parts 310, 340, 350 are illustratively positioned for subsequent heating treatment.

During manufacturing of the hybrid metal-composite component unit 300, the sequencer shaft aft part 310 and the sequencer shaft middle part 340 are heated in the aft part overlap area 315 and/or the sequencer shaft forward part 350 and the sequencer shaft middle part 340 are heated in the forward part overlap area 355 for melting the sequencer shaft middle part 340 in the aft part overlap area 315 and/or in the forward part overlap area 355 at least partly. Thus, thermoplastic matrix material of the sequencer shaft middle part 340 may pass through the at least one vent hole (e. g., vent holes 601, 602, 603, 604, 605, 606 of Figure 6).

Consolidation of the thermoplastic CFRP material of the hybrid metal-composite component unit 300 preferably results in joining the sequencer shaft aft part 310 and the sequencer shaft forward part 350 to the sequencer shaft middle part 340. By way of example, the consolidation requires heat and pressure, as described in more detail below at Figure 5, to melt the thermoplastic CFRP material, i. e. the thermoplastic matrix of the sequencer shaft middle part 340 such that it adopts the shape of the sequencer shaft aft part 310 and/or the sequencer shaft forward part 350.

For instance, the heat may be generated via induction as described in more detail below at Figure 7. Induction heating is suitable in particular for manufacturing the hybrid metal-composite component unit 300 using a non-consolidated, thermoplastic CFRP tube as sequencer shaft middle part 340. For instance, induction coils may be used to heat the thermoplastic CFRP material of the sequencer shaft middle part 340 and the sequencer shaft aft part 310 and/or the sequencer shaft forward part 350 locally as described in more detail below at Figure 7. The preferred induction frequency for thermoplastic CFRP material and different metals may vary largely. For instance, the preferred induction frequencies for thermoplastic CFRP material, titanium, and CRES alloy are 120 kHz, 866 kHz, and 854 kHz, respectively. Thus, an individual heating and temperature control of the thermoplastic CFRP tube forming the sequencer shaft middle part 340 and, e. g., associated titanium shafts forming respectively the sequencer shaft aft part 310 and/or the sequencer shaft forward part 350 during the manufacturing may be required.

Figure 5 shows the hybrid metal-composite component unit 300 of Figure 3 and Figure 4 with the sequencer shaft aft part 310, the sequencer shaft middle part 340, and the sequencer shaft forward part 350 in an intermediate state during its manufacturing. The sequencer shaft aft, middle, and forward parts 310, 340, 350 are illustratively tube-shaped, i. e. embodied with a hollow structure. The sequencer shaft middle part 340 is at least partially positioned inside of the sequencer shaft aft part 310 and/or the sequencer shaft forward part 350.

Illustratively, a high-pressure hose 500 is positioned within the sequencer shaft aft, middle, and forward parts 310, 340, 350. More specifically, the high-pressure hose 500 is positioned such that it is at least arranged in the aft part overlap area 315 and/or the forward part overlap area 355 formed by the sequencer shaft middle part 340 inside of the sequencer shaft aft part 310 and/or the sequencer shaft forward part 350. By way of example, the high-pressure hose 500 includes a hose aft pressure part 510 located at the aft part overlap area 315 and a hose forward pressure part 520 located at the forward part overlap area 355.

Preferably, the hose aft pressure part 510 presses the sequencer shaft middle part 340 in the aft part overlap area 315 against the sequencer shaft aft part 310 during the manufacturing, and the hose forward pressure part 520 presses the sequencer shaft middle part 340 in the forward part overlap area 355 against the sequencer shaft forward part 350 during the manufacturing. Thus, pressure is applied to the sequencer shaft middle part 340 in the aft and forward part overlap areas 315, 355 such that the thermoplastic matrix CFRP material of the hybrid metal-composite component unit 300 is pressed through, i. e. passes through at least one vent hole provided in the sequencer shaft aft part 310 and/or the sequencer shaft forward part 350 (e. g., vent holes 601, 602, 603, 604, 605, 606 in Figure 6).

Figure 6 shows the hybrid metal-composite component unit 300 of Figure 3 to Figure 5 with at least one and, preferably, a plurality of vent holes 600 which form a pattern of vent holes. Illustratively, six vent holes 601, 602, 603, 604, 605, 606 of the plurality of vent holes 600 are shown and, by way of example, arranged in the aft part overlap area 315 of the hybrid metal-composite component unit 300 of Figure 3 to Figure 5. For purposes of simplicity and clarity, only the aft part overlap area 315 with the plurality of vent holes 600 is shown and described in detail at Figure 6 representative for both the aft and forward part overlap areas 315, 355 of Figure 4 and Figure 5. In other words, the plurality of vent holes 600 is illustratively formed in the sequencer shaft aft part 310.

By way of example, at least one and, preferably, each one of the plurality of vent holes 600 in the sequencer shaft aft part 310 has a diameter of at most 3 mm, preferably in a range from 0.2 mm to 2 mm. By way of example, at least one and, preferably, each one of the plurality of vent holes 600 is formed in-situ during a suitable print process (e. g. a powder bed fusion process) used for creating the metal sequencer shaft aft part 310. The at least one and, preferably, each one of the plurality of vent holes 600 in the aft part overlap area 315 allows air captured between the sequencer shaft middle part 340 and the sequencer shaft aft part 310 during the manufacturing of the hybrid metal-composite component unit 300 to escape.

In fact, after melting of the thermoplastic CFRP material of the sequencer shaft middle part 340, liquid matrix resin flows through the plurality of vent holes 600 to the outside of the sequencer shaft aft part 310. In general, there is no significant resin surplus so that lateral resin projections 610 can be seen at the outside of the sequencer shaft aft part 310 in form of little resin balls. By way of example, existence of the lateral resin projections 611 and 612 outside the sequencer shaft aft part 310 at the plurality of vent holes, e. g. vent holes 601 and 602, indicates that the thermoplastic CFRP material of the sequencer shaft middle part 340 was melted during the manufacturing and has created a suitable joint with the metallic part, i. e. the sequencer shaft aft part 310. The visibility of the lateral resin projections 610, thus, represents a simple means to verify manufacturing conformity, especially with respect to the heating treatment described below at Figure 7.

Figure 7 shows the hybrid metal-composite component unit 300 of Figure 3 to Figure 5 with the sequencer shaft aft part 310, the sequencer shaft middle part 340, and the sequencer shaft forward part 350 during manufacturing using the manufacturing method of the present invention. The sequencer shaft middle part 340 is positioned between and partially encompassed by the sequencer shaft aft and forward parts 310, 350 to form the hybrid metal-composite component unit 300. An assembly tool 700 is used for assembling and manufacturing the hybrid metal-composite component unit 300 to ensure geometrical stability of all components during manufacturing.

Illustratively, the assembly tool 700 comprises a support plate 710 and several clamps 720. By way of example, four clamps 722, 724, 726, 728 are spaced at predetermined and, preferably, approximately constant intervals on the support plate 710 to support the hybrid metal-composite component unit 300 in its axial direction. For instance, two clamps 722 and 728 are respectively arranged at free ends of the sequencer shaft aft and forward parts 310, 350, whereas two clamps 724 and 726 are respectively arranged at connecting ends of the sequencer shaft aft and forward parts 310, 350, where the sequencer shaft aft and forward parts 310, 350 are connected to the sequencer shaft middle part 340.

By way of example, heating tools 730 are illustratively arranged near the two clamps 724 and 726 supporting the connecting ends of the sequencer shaft aft and forward parts 310, 350. For instance, an inductive heating element 732 is looping around the sequencer shaft aft part 310, and another inductive heating element 734 is looping around the sequencer shaft forward part 350.

Joining the sequencer shaft aft part 310, sequencer shaft middle part 340, and sequencer shaft forward part 350 using the assembly tool 700 may comprise the following steps:
Positioning of the sequencer shaft aft part 310, sequencer shaft middle part 340, and sequencer shaft forward part 350 on the assembly tool 700, comprising placing and clamping of the sequencer shaft aft part 310, sequencer shaft middle part 340, and sequencer shaft forward part 350 on the assembly tool 700 using the clamps 722, 724, 726, 728;
Application of pressure using the high-pressure hose 500 according to Figure 5 in order to adapt the geometry of the sequencer shaft middle part 340;
Application of heat and, more particularly, of local heat to the overlap areas 315 and 355 of Figure 4 and Figure 5 individually using the inductive heating elements 732 and 734, based on respectively required frequencies, to obtain required process temperatures (e. g. 300°C to 350°C for thermoplastic CFRP and 250°C to 300°C for metals) for a predetermined time of, for example, five minutes;
Cooling down of the hybrid metal-composite component unit 300;
Removal of the hybrid metal-composite component unit 300 from the assembly tool 700; and

Performing process security measures such as, e. g. conducting visual inspection of the pattern of the plurality of vent holes 600 of Figure 6.

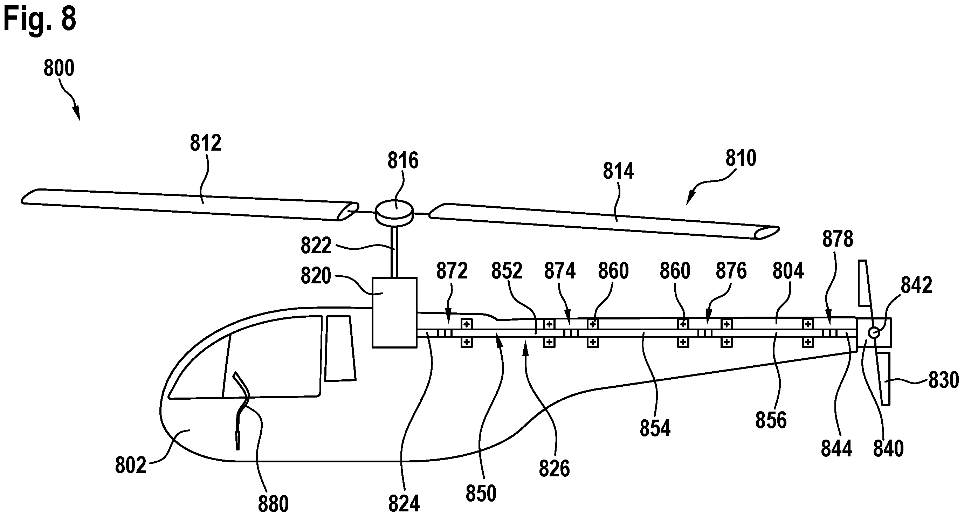

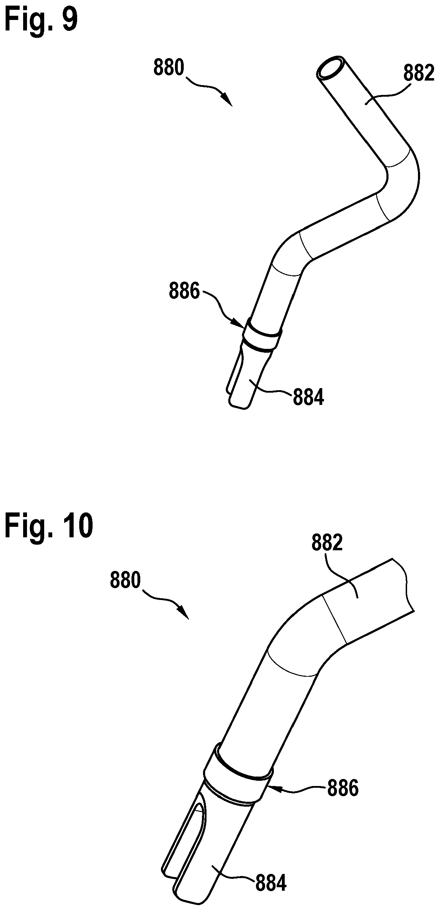

It should be noted that the illustrative realization described above relates to the method of manufacturing a hybrid metal-composite component unit which illustratively embodies a sequencer shaft. However, the present method is likewise applicable to manufacturing of any other hybrid metal-composite component unit, such as a collective shaft or a tail rotor shaft for a light twin engine helicopter as described in more detail below with reference to Figure 8, lever-shaft arrangements for gear systems, a torsion spring, a control stick as described in more detail below with reference to Figure 9 and Figure 10 for a helicopter of Figure 8 or a similar aircraft, etc.

Figure 8 shows an illustrative rotary-wing aircraft 800, which is sometimes also referred to as rotorcraft or helicopter 800. Illustratively, the rotorcraft 800 comprises a rotorcraft fuselage 802 and a control stick 880 is provided to enable e. g. flight control. A main rotor 810 is illustratively mounted to the fuselage 802 for providing lift and forward or backward thrust during operation. The main rotor 810 is driven by a main gearbox 820 and illustratively embodied as a multi-blade rotor having at least two rotor blades 812 and 814 that are connected to a rotor head 816. The rotorcraft 800 preferably further comprises a rotorcraft tail 804 attached to the aft part of the fuselage 802 and equipped with at least one anti-torque rotor 830, which is driven by a tail gearbox 840 and illustratively embodied as a tail rotor.

By way of example, the main gearbox 820 is provided with at least one first and one second main gearbox output shaft 822 and 824. The first main gearbox output shaft 822 couples the main gearbox 820 to the main rotor 810 for power transmission to the latter. The second main gearbox output shaft 824 couples the main gearbox 820 via a power transmission line 826 to a tail gearbox input shaft 844 of the tail gearbox 840. The latter is illustratively provided with at least one tail gearbox output shaft 842 and adapted to transmit power received via the tail gearbox input shaft 844 by means of the tail gearbox output shaft 842 to the anti-torque rotor 830.

Illustratively, the power transmission line 826 comprises a control shaft unit 850 which comprises a thermoplastic composite component and at least one metallic connecting component forming together a hybrid metal-composite component unit that is manufactured similar to manufacturing of the hybrid metal-composite component unit 300 of Figure 3 to Figure 7. By way of example, the control shaft unit 850 comprises three control shaft sections including illustratively one thermoplastic composite component 854 and two metallic end pieces, i. e. connecting components 852, 856.

Preferably, the control shaft unit 850 is supported by several supporting bearings 860. By way of example, each control shaft section 852, 854, 856 is supported by a pair of two associated supporting bearings 860.

More specifically, in an illustrative realization the control shaft unit 850 comprises a thermoplastic composite component, i. e., control shaft section 854, which is made from thermoplastic CFRP material by a braiding or winding process. Preferably, the control shaft section 854 is a hose type fabric and not consolidated prior to manufacturing of the control shaft unit 850. The end-pieces, i. e. metallic connecting components 852 and 856, may be made by additive manufacturing or machining and are preferably each equipped with a pattern of vent holes 600 as described in Figure 6 to simplify inspection of the joined connection.

Furthermore, the control shaft section 852 and the control shaft section 854 may both comprise matching polygonal cross sections for forming a form-fit connection in an overlap area 874, whereas the control shaft section 854 and the control shaft section 856 may also both comprise additional matching polygonal cross sections for forming another form-fit connection in another overlap area 876.

Moreover, further additional overlap areas 872 and 878 may respectively be formed between the second main gearbox output shaft 824 and the control shaft section 852 and between the control shaft section 856 and the tail gearbox input shaft 844. By way of example, six-sided polygon shapes may be used as flange geometry in any one of all overlap areas 872, 874, 876, 878 for forming the form-fit connections, if desired.

By way of example, the assembly tool 700 as described in Figure 7 may be used to ensure geometric stability of the control shaft sections 852, 854, 856 during manufacturing. The high-pressure hose 500 as described in Figure 5 may similarly by used to provide necessary pressure for the adaptation of the geometry. Thus, manufacturing of the control shaft unit 850 may be performed as described above with respect to the hybrid metal-composite component unit 300 at Figure 3 to Figure 7.

However, as an alternative to the inductive heating elements 732 and 734 described in Figure 7, a conventional oven may be used as the heating tool to provide sufficient heat. Such a conventional oven suits in particular for the control shaft section 854 which is a non-consolidated, thermoplastic CFRP material section. The heat provided by an oven together with the pressure provided by the high-pressure hose 500 of Figure 5 may, thus, be used to melt the thermoplastic CFRP material, i. e. the thermoplastic matrix of the control shaft section 854 such that is adopts the shape of the control shaft sections 852 and 856.

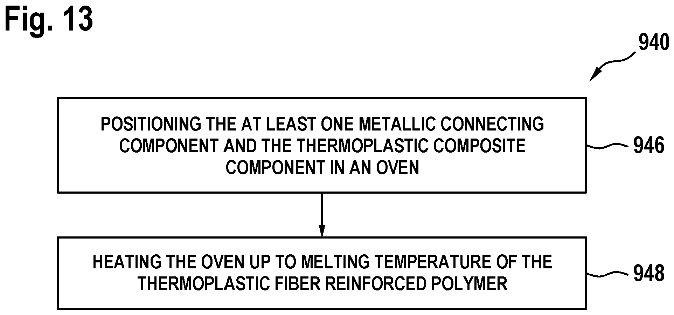

By way of example, use of a conventional oven is described at Figure 13 and shall be applied to heat the installation on the assembly tool 700 to a respectively required melting temperature. Convection is used to transfer the energy from the oven to the control shaft sections 852, 854, 856.

After a subsequent cooling down and removal from the assembly tool 700 of Figure 7, visual inspection of the pattern of vent holes 600 as described at Figure 6 is preferably performed. Alternatively, ultra-sound check, process compensated resonance testing, X-ray, and/or computer tomography may also be used to ensure process security.

It should be noted that in the above-described illustrative realization the control shaft sections 852 and 856 are metallic connecting components whereas the control shaft section 854 is a thermoplastic composite component. However, the inventive manufacturing method may likewise be applied to form a hybrid metal-composite component unit that comprises more than one thermoplastic composite component and one or more than two metallic connecting components.

For instance, the control shaft sections 852 and 856 may be the thermoplastic composite components and the control shaft section 854 may be the metallic connecting component so that a hybrid metal-composite component unit may be formed using one metallic connecting component and two thermoplastic composite components. Furthermore, the second main gearbox output shaft 824 and the tail gearbox input shaft 844 may also be metallic connecting components so that the second main gearbox output shaft 824, the tail gearbox input shaft 844, and the three control shaft sections 852, 854, 856 may form a hybrid metal-composite component unit having three metallic connecting components and two thermoplastic composite components.

It should further be noted that the hybrid metal-composite component unit is illustrated as the control shaft unit 850 with substantially straight control shaft sections. Figure 9 and Figure 10, in turn, show applications with bended shaft sections.

Figure 9 shows the control stick 880 of the rotorcraft 800 of Figure 8 which illustratively comprises a bended shaft 882 and a fitting 884. Figure 10 shows an enlarged view of the joined connection between the bended shaft 882 and the fitting 884.

Illustratively, the bended shaft 882 is a thermoplastic CFRP shaft and the fitting 884 is a metallic component. For instance, the bended shaft 882 may be a non-consolidated, thermoplastic CFRP tube. The metallic fitting 884 is preferably made from titanium and may, alternatively, be made from CRES alloy or enhanced aluminum alloy. The metallic fitting 884 is used, by way of example, to connect the bended shaft 882 with an avionic system of the rotorcraft 800 of Figure 8. In an illustrative realization, the control stick 880 is embodied as a hybrid metal-composite component unit that is manufactured similar to manufacturing of the hybrid metal-composite component unit 300 of Figure 3 to Figure 7.

More specifically, as shown in Figure 9 and Figure 10 an overlap area 886 is created between the bended shaft 882 and the fitting 884. Preferably, a form fit is formed between the bended shaft 882 and the fitting 884. Furthermore, a consolidation process providing suitable temperature and pressure may be applied to consolidate the non-consolidated, thermoplastic CFRP tube forming the bended shaft 882 into its final geometry and at the same time creating a connection with the metallic fitting 884.

If desired, a forming tool similar to the assembly tool 700 described in Figure 7 may be used to stabilize the bended shaft 882 during the manufacturing at the outside and a high-pressure hose similar to the high-pressure hose 500 described in Figure 5 may be used to apply consolidation pressure from the inside.

According to some aspects, the metallic fitting 884 is equipped with a pattern of vent holes 600, such as described at Figure 6, which is used to evacuate air from the gap between the bended shaft 882 and the fitting 884 before the consolidation. During the manufacturing, the vent holes 600 are filled with melted resin of the bended shaft 882 which is visible at the outside thereof as lateral resin projections as described in Figure 6 to allow a straight-forward inspection.

In addition to the control stick 880, other structures such as a torsion spring may likewise be manufactured using the present method to form a hybrid metal-composite component unit. A technical torsion spring is designed to a point of operation between torsional deformation and a desired torque. At this point of operation, the mechanical properties and the necessary reserve factors are met.

By way of example, the torsion spring uses a load introduction fitting to realize a clamping on the one side and a metallic lever on the other side. The fitting and the lever may both be metallic connecting components. Between the fitting and the lever, a thermoplastic composite component such as a shaft or tube made from thermoplastic CFRP is installed. The thermoplastic CFRP shaft or tube is designed from its diameter, wall thickness, fiber orientation and topology such that a targeted spring rate is achieved. In an illustrative realization, the torsion spring is manufactured as a hybrid metal-composite component unit similar to manufacturing of the hybrid metal-composite component unit 300 of Figure 3 to Figure 7.

Figure 11 shows a method 900 of manufacturing a hybrid metal-composite component unit that is, preferably, suitable for use in aeronautical applications according to the present invention. The hybrid metal-composite component unit may e. g. be the sequencer shaft 300 of Figure 3 to Figure 7 with the at least one vent hole 600 of Figure 6, the control shaft unit 850 of Figure 8, the control stick 880 of Figure 9 and Figure 10, as well as any other hybrid metal-composite component unit, such as the torsion spring described above.

More specifically, according to the present invention, the method 900 of manufacturing a hybrid metal-composite component unit comprises at least the following steps which start with an operation 910, wherein a thermoplastic composite component comprising non-consolidated material and/or consolidated material is provided.

Subsequently, in an operation 920, at least one metallic connecting component comprising at least one vent hole is provided. It should, however, be noted that according to the present invention the operation 920 may be performed prior to the operation 910 or, if desired, the operations 910 and 920 may be performed simultaneously.

Subsequently, in an operation 930, a form-fit connection between the at least one metallic connecting component and the thermoplastic composite component is formed. The at least one metallic connecting component encompasses the thermoplastic composite component in at least one overlap area. The at least one vent hole is arranged in the overlap area.

Then, in a final operation 940, the at least one metallic connecting component and the thermoplastic composite component are heated in the overlap area for melting the thermoplastic composite component in the overlap area at least partly such that thermoplastic material of the thermoplastic composite component passes through the at least one vent hole.

More specifically, the operation 940 of heating the at least one metallic connecting component and the thermoplastic composite component in the overlap area preferably comprises an operation of applying pressure to the thermoplastic composite component in the overlap area such that the thermoplastic material is pressed through the at least one vent hole and passes through the at least one vent hole.

Upon completion of the manufacturing operations described above, the at least one metallic connecting component and the thermoplastic composite component may be left to cool down and a visual inspection may be accomplished afterwards by checking whether resin is visible in all vent holes. Thus, a clear 'pass' (e. g. resin visible at all vent holes) criteria and a clear 'fail' criteria (e. g. 50 percent of the vent holes are not filled) may be verified after the manufacturing of the hybrid metal-composite component unit. As such, a simple visual inspection, which especially suits for a serial production, is enabled by the present manufacturing method.

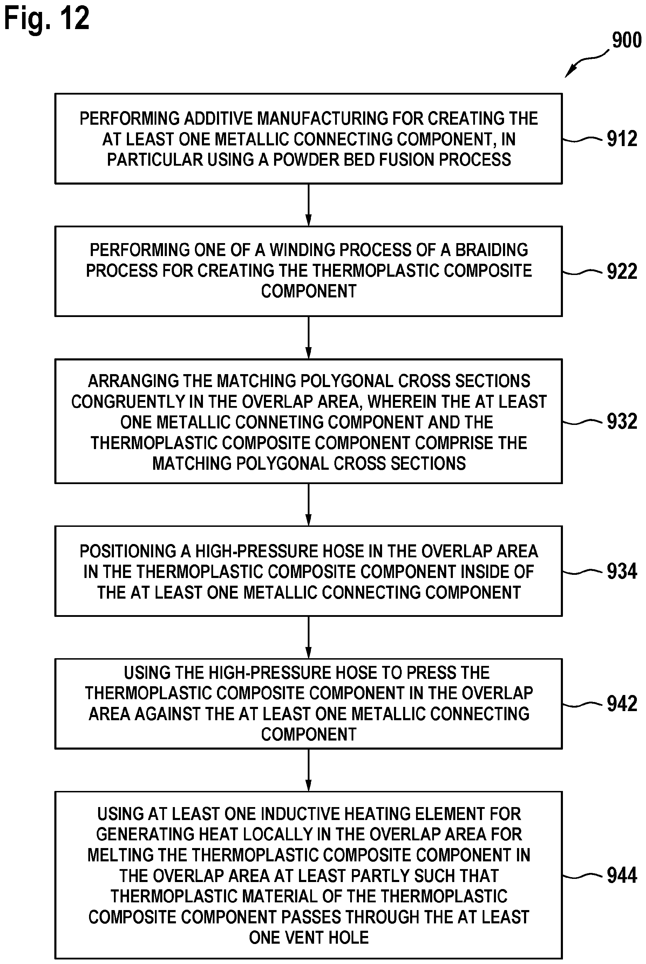

Figure 12 shows the method 900 of Figure 11 according to a more detailed implementation. More specifically, the thermoplastic composite component that is provided in operation 910 of Figure 11 preferably comprises a thermoplastic fiber reinforced polymer, in particular a thermoplastic CFRP. According to some aspects, the thermoplastic composite component may comprise at least one of a tube-shaped shaft, or a torsion spring.

Preferably, the operation 910 of Figure 11 of providing a thermoplastic composite component comprising non-consolidated material and/or consolidated material preferably comprises an operation 912 of performing one of a winding process or a braiding process for creating the thermoplastic composite component.

Furthermore, the at least one metallic connecting component that is provided by operation 920 of Figure 11 preferably comprises at least one of titanium, a titanium alloy, CRES, a CRES alloy, or an aluminum alloy. According to some aspects, the at least one metallic connecting component comprises at least one of a tube-shaped shaft, lever, or stick, or a sleeve-shaped fitting, or connector.

Preferably, the operation 920 of Figure 11 of providing at least one metallic connecting component comprising at least one vent hole comprises an operation 922 of performing additive manufacturing for creating the at least one metallic connecting component. In particular, the at least one metallic connecting component may be created using a powder bed fusion process.

More specifically, performing additive manufacturing for creating the at least one metallic connecting component preferably comprises creating the at least one vent hole with a diameter of at most 3 mm, preferably in a range from 0.2 mm to 2 mm.

According to some aspects, the at least one metallic connecting component and the thermoplastic composite component comprise matching polygonal cross sections. Preferably, the operation 930 of Figure 11 of forming the form-fit connection between the at least one metallic connecting component and the thermoplastic composite component comprises an operation 932 of arranging the matching polygonal cross sections congruently in the overlap areas.

Illustratively, the at least one metallic connecting component and the thermoplastic composite component are hollow structures, i. e. they are tube-shaped. Preferably, prior to heating the at least one metallic connecting component and the thermoplastic composite component in the overlap area according to operation 940 of Figure 11, the manufacturing method 900 may further comprise an operation 934 of positioning a high-pressure hose in the overlap areas in the thermoplastic composite component inside of the at least one metallic connecting component.

More specifically, applying pressure to the thermoplastic composite component in the overlap areas such that the thermoplastic material is pressed through the at least one vent hole preferably comprises an operation 942 of using the high-pressure hose to press the thermoplastic composite component in the overlap areas against the at least one metallic connecting component.

According to some aspects, the thermoplastic composite component is a consolidated thermoplastic composite component such as the sequencer shaft middle part 340 of the sequencer shaft 300 described in Figure 3. By way of example, heating the at least one metallic connecting component and the consolidated thermoplastic composite component in the overlap areas according to operation 940 of Figure 11 preferably comprises an operation 944 of using at least one inductive heating element for generating heat locally in the overlap areas as described at Figure 7.

According to some aspects, the thermoplastic composite component is a non-consolidated thermoplastic composite component such as the control shaft section 854 of the control shaft 850 described at Figure 8, or the bended shaft 882 of the control stick 880 described at Figure 9. Preferably, heating the at least one metallic connecting component and the non-consolidated thermoplastic composite component in the overlap areas according to operation 940 of Figure 11 comprises operations 946 and 948 described at Figure 13.

Figure 13 shows a heat generating process as an alternative performed in operation 944 of Figure 12. More specifically, the heat generating process described at Figure 13 may be performed as part of operation 940 of Figure 11 together with operations 910 to 930 of Figure 11. Alternatively, the heat generating process described at Figure 13 may be performed together with operations 912 to 942 of Figure 12.

As shown in Figure 13, the operation 940 may comprise positioning the at least one metallic connecting component and the non-consolidated thermoplastic composite component in an oven according to operation 946, and heating the oven up to melting temperature of the thermoplastic fiber reinforced polymer according to operation 948. Thus, convection is used to transfer the energy from the oven to the thermoplastic composite component.

It should be noted that the above described embodiments are merely described to illustrate possible embodiments of the present invention, but not in order to restrict the present invention thereto. Instead, multiple modifications and variations of the above described embodiments are possible and should, therefore, also be considered as being part of the invention.

For instance, according to Figure 3 to Figure 5 the sequencer shaft middle part 340 of the sequencer shaft 300 is embodied as thermoplastic composite component and the sequencer shaft aft and forward parts 310 and 350 are embodied as metallic connecting components. However, if desired, the sequencer shaft middle part 340 may be a metallic connecting component and the sequencer shaft aft and forward parts 310 and 350 may be thermoplastic composite components.

Furthermore, according to Figure 7 the sequencer shaft 300 is heated using inductive heating elements 732, 734. However, if desired, the sequencer shaft 300 may be heated by an oven as descried at Figure 13.

### Reference List

100 aircraft
102 aircraft airframe, fuselage
103a aircraft passenger cabin
103b aircraft cargo deck
103c aircraft flight deck
104 aircraft doors
104a, 104b, 104c, 104d cabin access doors
104e cargo deck access door
200 aircraft passenger door
201 door structure
203 door outer skin
205 electromechanical door activation system
207 rods
209 control shafts
300 sequencer shaft
310 sequencer shaft aft part
315 aft part overlap area
320 bearing component
330 lever component
340 sequencer shaft middle part
342 aft matching polygonal cross sections
346 forward matching polygonal cross sections
350 sequencer shaft forward part
355 forward part overlap area
500 high-pressure hose
510 hose aft pressure part
520 hose forward pressure part
600 vent holes
601, 602, 603, 604, 605, 606 vent hole
610 lateral resin projections
611, 612 lateral resin projection
700 assembly tool
710 support plate
720 clamps
722, 724, 726, 728 clamp
730 heating tools
732, 734 inductive heating element
800 rotorcraft
802 rotorcraft fuselage
804 rotorcraft tail
810 multi-blade rotor
812, 814 rotor blades
816 rotor head
820 main gearbox
822 first main gearbox output shaft
824 second main gearbox output shaft
826 power transmission line
830 tail rotor
840 tail gearbox
842 tail gearbox output shaft
844 tail gearbox input shaft
850 control shaft unit
852, 854, 856 control shaft section
860 support bearings
872, 874, 876, 878 overlap area
880 control stick
882 bended shaft
884 fitting
886 overlap area
900 method
910, 920, 930, 940 operations
912, 922, 932, 934, 942, 944, 946, 948 operations

## Claims

1. A method (900) of manufacturing a hybrid metal-composite component unit (300) that is suitable for use in aeronautical applications, said method comprising at least the steps of:
- Providing a thermoplastic composite component (340) comprising non-consolidated material and/or consolidated material;
- Providing at least one metallic connecting component (310, 350) comprising at least one vent hole (601, 602, 603, 604, 605, 606);
- Forming a form-fit connection between the at least one metallic connecting component (310, 350) and the thermoplastic composite component (340), wherein the at least one metallic connecting component (310, 350) encompasses the thermoplastic composite component (340) in an overlap area (315, 355), and wherein the at least one vent hole (601, 602, 603, 604, 605, 606) is arranged in the overlap area (315, 355); and
- Heating the at least one metallic connecting component (310, 350) and the thermoplastic composite component (340) in the overlap area (315, 355) for melting the thermoplastic composite component (340) in the overlap area (315, 355) at least partly such that thermoplastic material of the thermoplastic composite component (340) passes through the at least one vent hole (601, 602, 603, 604, 605, 606).

2. The method (900) of claim 1, wherein heating the at least one metallic connecting component (310, 350) and the thermoplastic composite component (340) in the overlap area (315, 355) comprises:
- Applying pressure to the thermoplastic composite component (340) in the overlap area (315, 355) such that the thermoplastic material is pressed through the at least one vent hole (601, 602, 603, 604, 605, 606) and passes through the at least one vent hole (601, 602, 603, 604, 605, 606).

3. The method (900) of claim 1 or 2, wherein the at least one metallic connecting component (310, 350) and the thermoplastic composite component (340) are hollow; and wherein the method (900) further comprises:
- Prior to heating the at least one metallic connecting component (310, 350) and the thermoplastic composite component (340) in the overlap area (315, 355), positioning a high-pressure hose (500) in the overlap area (315, 355) in the thermoplastic composite component (340) inside of the at least one metallic connecting component (310, 350).

4. The method (900) of claim 2 and 3, wherein applying pressure to the thermoplastic composite component (340) in the overlap area (315, 355) such that the thermoplastic material is pressed through the at least one vent hole (601, 602, 603, 604, 605, 606) comprises:
- Using the high-pressure hose (500) to press the thermoplastic composite component (340) in the overlap area (315, 355) against the at least one metallic connecting component (310, 350).

5. The method (900) of any one of the preceding claims, wherein the at least one metallic connecting component (310, 350) and the thermoplastic composite component (340) comprise matching polygonal cross sections (342, 346); and wherein forming the form-fit connection between the at least one metallic connecting component (310, 350) and the thermoplastic composite component (340) comprises:
- Arranging the matching polygonal cross sections (342, 346) congruently in the overlap area (315, 355).

6. The method (900) of any one of the preceding claims, wherein the at least one metallic connecting component (310, 350) comprises at least one of titanium, a titanium alloy, corrosion-resistant steel, a corrosion-resistant steel alloy, or an aluminum alloy.

7. The method (900) of claim 6, wherein providing the at least one metallic connecting component (310, 350) comprising the at least one vent hole (601, 602, 603, 604, 605, 606) comprises:
- Performing additive manufacturing for creating the at least one metallic connecting component (310, 350), in particular using a powder bed fusion process.

8. The method (900) of claim 7, wherein performing additive manufacturing for creating the at least one metallic connecting component (310, 350) comprises:
- Creating the at least one vent hole (601, 602, 603, 604, 605, 606) with a diameter of at most 3 mm, preferably in a range from 0.5 mm to 1.5 mm.

9. The method (900) of any one of the preceding claims, wherein the thermoplastic composite component (340) comprises a thermoplastic fiber reinforced polymer, in particular a thermoplastic carbon fiber reinforced polymer.

10. The method (900) of claim 9, wherein providing the thermoplastic composite component (340) comprises:
- Performing one of a winding process or a braiding process for creating the thermoplastic composite component (340).

11. The method (900) of claim 9 or 10, wherein the thermoplastic composite component (340) is a consolidated thermoplastic composite component (340); and wherein heating the at least one metallic connecting component (310, 350) and the thermoplastic composite component (340) in the overlap area (315, 355) comprises:
- Using at least one inductive heating element (732, 734) for generating heat locally in the overlap area (315, 355).

12. The method (900) of claim 9 or 10, wherein the thermoplastic composite component (340) is a non-consolidated thermoplastic composite component (340); and wherein heating the at least one metallic connecting component (310, 350) and the thermoplastic composite component (340) in the overlap area (315, 355) comprises:
- Positioning the at least one metallic connecting component (310, 350) and the thermoplastic composite component (340) in an oven; and
- Heating the oven up to melting temperature of the thermoplastic fiber reinforced polymer.

13. The method (900) of any one of the preceding claims, wherein the at least one metallic connecting component (310, 350) comprises at least one of a tube-shaped shaft, lever, or stick, or a sleeve-shaped fitting, or connector; and wherein the thermoplastic composite component (340) comprises at least one of a tube-shaped shaft, or a torsion spring.

14. An aircraft passenger door (200) for an aircraft (100), comprising a thermoplastic composite component (340) and at least one metallic connecting component (310, 350) forming together a hybrid metal-composite component unit (300) that is manufactured according to any one of the preceding claims.

15. A control shaft unit (850) for a rotorcraft (800), comprising a thermoplastic composite component (854) and at least one metallic connecting component (852, 856) forming together a hybrid metal-composite component unit that is manufactured according to any one of claims 1 to 13.
